**Europäisches Patentamt**

**European Patent Office**

**Office européen des brevets**

(11) Veröffentlichungsnummer: **0 203 217**
A1

# (12) EUROPÄISCHE PATENTANMELDUNG

(21) Anmeldenummer: 85106636.5

(22) Anmeldetag: 30.05.85

(51) Int. Cl.⁴: **B 23 Q 7/14**, B 65 G 37/02

(43) Veröffentlichungstag der Anmeldung: **03.12.86**
**Patentblatt 86/49**

(84) Benannte Vertragsstaaten: **AT BE CH DE FR GB IT LI NL SE**

(71) Anmelder: **Fritz, Hans-Ulrich, Dipl.-Ing., Am Wolfsberg 10, D-7000 Stuttgart 70 (DE)**

(72) Erfinder: **Fritz, Hans-Ulrich, Dipl.-Ing., Am Wolfsberg 10, D-7000 Stuttgart 70 (DE)**

(74) Vertreter: **Patentanwälte Ruff und Beier, Neckarstrasse 50, D-7000 Stuttgart 1 (DE)**

(54) **Indexier-Einrichtung für Stückgutträger eines Fertigungs-, Montage- oder dgl. Systems.**

(57) Ein Stückgutträger (1) wird mit einem einzigen Indexierrad (31) gegenüber einer Laufschiene (22) in seiner Laufrichtung (Pfeil 3) genau ausgerichtet und dann in der ausgerichteten Position arretiert. Zur Ausrichtung ist das Indexierrad (31) mit einem Stellmotor (38) antriebsverbunden und zur Arretierung mit einer Bremseinrichtung (40) versehen. Der Stellmotor (38) und die Bremseinrichtung (40) werden von einer Meß- und Steuereinheit (73) beeinflußt, die benachbart zum Indexierglied (31) mit einem Meßrad in den Stückgutträger (1) eingreift.

Anmelder:     Dipl.-Ing.
              Hans-Ulrich Fritz
              Am  Wolfsberg 10

              7000 Stuttgart 70

Indexier-Einrichtung für Stückgutträger
eines Fertigungs-, Montage- oder dgl.
Systems

Die Erfindung betrifft eine Indexier-Einrichtung für entlang einer Förderstraße durch Arbeitsstationen eines
Fertigungs-, Montage- oder dgl. Systems laufende und in
mindestens einer vorbestimmten Arbeitslage gegenüber der
Förderstraße ausgerichtet festzusetzende Stückgutträger,
mit einem während des Aufenthaltes in dem zugehörigen
Streckenabschnitt in Eingriff mit einer in Laufrichtung
liegenden Arretierleiste des Stückgutträgers zu bringenden und über eine Wegmeßeinrichtung gesteuert den Stückgutträger in der jeweiligen Arbeitslage festsetzenden
Indexierglied, den räumlich mindestens ein während des
Aufenthaltes in dem Streckenabschnitt in Eingriff mit
einer in Laufrichtung liegenden Antriebsleiste des Stückgutträgers stehendes Antriebsglied zugeordnet ist.

Durch die europäische Patentanmeldung 0 062 267 ist
ein Fertigungs- und Montage-System bekannt geworden,
bei welchem die als Stückgutträger vorgesehenen Werkstückträger als Arretier- und Antriebsleisten an ihren Außenseiten liegende Zahnstangen aufweisen, in welche als Antriebsglieder Zahnräder und
als Indexierglieder Zahnsegmente eingreifen, welche
rechtwinklig zur Laufrichtung in die jeweilige Zahnstange einrastbar sind. Diese Anordnung ist in vielen
Fällen ausreichend und sichert eine sehr genaue Positionierung des Werkstückträgers, obgleich sie nur in
Schritten, welche der Zahnteilung entsprechen, arretieren
bzw. indexieren kann. Insbesondere dort, wo mehrere
Stückgutteile in Laufrichtung hintereinander und in Abständen, die nicht mit der Zahnteilung korrespondieren,
an dem Stückgutträger angeordnet sind und nacheinander in
identischer Stellung positioniert werden sollen, treten
jedoch bei diesem bekannten System Schwierigkeiten auf.

Der Erfindung liegt die Aufgabe zugrunde, eine Indexier-
Einrichtung der genannten Art zu schaffen, welche es auf
einfache Weise ermöglicht, den Stückgutträger in beliebig
großen und kleinen Wegschritten nacheinander mit hoher
Präzision zu positionieren, um dadurch den Anwendungsbereich der Indexier-Einrichtung gegenüber bekannten Einrichtungen zu erweitern.

Diese Aufgabe wird bei einer Indexier-Einrichtung der
eingangs genannten Art gemäß der Erfindung dadurch gelöst,
daß das Indexierglied stufenlos in Eingriff mit der
Arretierleiste steht. Durch diese überraschend einfache
Maßnahme, die beispielsweise durch eine hinsichtlich der
Wegstrecke genau bestimmbare Bewegbarkeit des Zahnsegmentes in Laufrichtung erreicht werden kann, wird es möglich, den Stückgutträger in der jeweiligen Station,
insbesondere in Bezug auf die Laufrichtung, in jeder beliebigen Lage festzusetzen und dadurch zu indexieren.

Um eine möglichst schnelle und kontinuierliche Arbeitsweise der Einrichtung zu erzielen, ist das Indexierglied
als an der Arretierleiste laufendes Wälzglied, insbesondere als Rad, Riemen oder dgl. ausgebildet, so daß es
nicht nur schrittweise hin- und hergehend, sondern auch
kontinuierlich in derselben Richtung umlaufend angewandt
werden kann. Insbesondere bei dieser Ausbildung läßt sich
der Stückgutträger in der jeweiligen Position auf einfache Weise dadurch festsetzen, daß für das Indexierglied eine in Steuerverbindung mit der Wegmeßeinrichtung
stehende Feststellbremse vorgesehen ist. Die Ausbildung
des Indexiergliedes als Wälzglied erlaubt es ferner in
einfacher Weise, auf ein gesondertes Antriebsglied zu verzichten und die Antriebskraft zur Bewegung des Stückgutträgers in Laufrichtung unmittelbar über das Indexierglied zu übertragen, so daß also das abwechselnd stattfindende Indexieren und Antreiben des Stückgutträgers
über nur ein einziges, mit diesem in Eingriff stehendes
Glied erfolgt. Zur genauen Steuerung steht zweckmäßig
der Antriebsmotor des Antriebsgliedes in Form eines
Stellmotors und zusätzlich hierzu oder stattdessen eine
in der Antriebsverbindung zwischen Antriebsglied und
Antriebsmotor vorgesehene Schaltkupplung in Steuerverbindung mit der Wegmeßeinrichtung, insbesondere derart, daß
das Antriebsglied bei eingerückter Feststellbremse antriebsfrei ist.

Bei einer einfachen Ausführungsform des Erfindungsgegenstandes liegt die Feststellbremse, vorzugsweise in Form
einer in beliebig kleinen aufeinanderfolgenden Laufschritten gleichermaßen wirksamen Reibungsbremse, unmittelbar benachbart zum Indexierglied, so daß innere
Elastizitäten in der Verbindung zwischen dem gebremsten Glied und dem Indexierglied nicht zu Ungenauigkeiten bei
der Positionierung des Stückgutträgers führen können. Dies
ist insbesondere der Fall, wenn die die Feststellbremse
aufweisende Bremseinrichtung mindestens ein gegen eine
achsgleich zum Indexierglied liegende Umfangs-Bremsfläche
anlegbares Bremsglied aufweist.

Nach einem weiteren Merkmal der Erfindung ist die die Feststellbremse aufweisende Bremseinrichtung außer in die
arretierende Vollbremsstellung in mindestens eine, insbesondere zwei weitere Bremsstellungen geringerer Bremswirkung, nämlich in mindestens eine Dämpfbremsstellung überführbar, wobei vorzugsweise zwischen einer Dämpfbremsstellung und der Vollbremsstellung stufenlose Übergänge
bzw. zwischen den beiden Dämpfbremsstellungen mindestens
eine ungebremste Leerstellung vorgesehen ist. Dadurch
können die Stückgutträger und die Schienen der Förderstraße, die eine Transferstraße sein kann, ohne weiteres
so ausgebildet werden, daß die Stückgutträger im ungebremsten Zustand einen extrem leichten, nahezu reibungsfreien Lauf haben, da die Stückgutträger während des
Indexierens durch die Dämpfbremsung in einen Laufzustand
mit höherer Laufreibung versetzt werden können, wobei das
Maß dieser Reibung genau bestimmbar ist, was der Genauigkeit bei der Positionierung  bzw. Indexierung des Stückgutträgers entgegenkommt, und es ermöglicht, einfache
Getriebemotoren zu verwenden, da durch die Dämpfbremsung
eventuelles Getriebespiel eliminiert wird.

Zur einfachen Überführung der Bremseinrichtung in die jeweils vorgesehene Bremsstellung ist das jeweilige Bremsglied, insbesondere unter Zwischenschaltung einer Feder,
kurvengesteuert, wobei vorzugsweise das Bremsglied an
einem benachbart zur Bremsfläche um eine zu dieser etwa
parallele Lenkerachse schwenkbar gelagerten Bremshebel
angeordnet ist, der einen an einer Nockenkurve geführten
Läufer, beispielsweise eine leichtgängige Läuferrolle,
trägt. Die Bremseinrichtung kann somit über eine einzige Nockenkurve in schneller Aufeinanderfolge in alle genannten Bremsstellungen überführt werden, wobei die Feder einen stets gleichen Bremsdruck des zugehörigen Bremsgliedes gewährleistet. Bei einer bevorzugten Ausführungsform ist der Bremshebel als zweiarmige Bremsschwinge ausgebildet, die an einem Arm ein Dämpfbremsglied und am anderen, insbesondere mit dem Läufer versehenen, Arm ein Arretier-Bremsglied trägt, welche vorzugsweise beide derselben Bremsfläche des Indexiergliedes zugeordnet sind, so daß sich eine einfache und raumsparende Ausbildung ergibt.

Damit das Arretier-Bremsglied sowohl in eine Dämpfbremsstellung mit genau bestimmbarer Bremswirkung als auch mit schnellem kontinuierlichem Anstieg aus dieser Dämpfbremsstellung in die Vollbremsstellung überführt werden kann, ist der Bremshebel zwischen dem Läufer und dem Arretier-Bremsglied in sich federnd beweglich ausgebildet, so daß also die Nockenkurve nicht formschlüssig starr, sondern unter Zwischenschaltung einer Feder auf das Arretier-Bremsglied einwirkt. Bei einer konstruktiv einfachen Ausführungsform besteht der Bremshebel aus zwei schwenkbar aneinandergelagerten Hebelteilen, von denen einer den Läufer und der andere das Bremsglied trägt und die über eine vorgespannte Zugfeder in Eingriff miteinander stehen.

Nach einem weiteren Vorschlag gemäß der Erfindung sind das Indexierglied und/oder der Stellmotor und/oder die Schaltkupplung an einem quer zur Laufebene der Arretierleiste an einer Konsole bewegbar, insbesondere schwenkbar gelagerten Träger angeordnet, der vorzugsweise zur Eingriffsstellung des Indexiergliedes federbelastet ist, so daß sich das Indexierglied von selbst auf den optimalen Eingriff in die Arretierleiste des Stückgutträgers einstellen kann. Ist demgegenüber der Träger mit einer Andrückeinrichtung gegen den an einem Widerlager der Förderstraße, beispielsweise an einem dem Indexierglied gegenüberliegenden Schienenabschnitt, abstützbaren Stückgutträger preßbar, so kann der Stückgutträger mit der Indexier-Einrichtung auch quer zur Laufrichtung mit hoher Genauigkeit ausgerichtet werden. Die Andrückeinrichtung kann in einfacher Weise durch die Feststellbremse gebildet sein, beispielsweise dadurch, daß als Druckglied der Andrückeinrichtung das Arretier-Bremsglied vorgesehen ist, welches hierfür zweckmäßig an einem von der Laufebene der Arretierleiste abgekehrten Umfangsabschnitt der Bremsfläche liegt. Durch den Bremsdruck wird somit der Stückgutträger quer zur Laufrichtung ausgerichtet und in Laufrichtung festgesetzt.

In weiterer Ausbildung der Erfindung ist eine das Indexierglied in einer Einlaufstellung für die Arretierleiste gegen Abhebbewegungen von deren Laufebene sichernde Verriegelungs-Einrichtung vorgesehen. Dadurch ist sichergestellt, daß das Indexierglied beim Einlaufen des Stückgutträgers eine vorbestimmte Stellung einnimmt, durch welche es während der Verriegelung nicht zurückweichen kann. Diese Einlaufstellung ist zweckmäßig so gewählt, daß das Indexierglied, welches in der Regel auch in Wirkverbindung mit der Wegmeßeinrichtung steht, ab einer genau vorbestimmten Stelle mit dem Stückgutträger in Eingriff steht, so daß der Stückgutträger dann von einer genau festgelegten Ausgangsstellung ausgehend in die unterschiedlichen Stellungen in seiner Laufrichtung einjustiert werden kann. Die Verriegelungs-Einrichtung weist in einer vorteilhaft wirksamen Ausgestaltung eine Kurvenscheibe und einen an dieser geführten Läufer, beispielsweise eine Läuferrolle, auf. Zweckmäßig ist die Verriegelungseinrichtung derart synchron mit der Bremseinrichtung gesteuert, daß
sie am Ende der nicht bremsenden Leerstellung der Bremseinrichtung etwa in maximaler Freigabestellung steht, so
daß das Indexierglied in diesem Fall entgegen der Wirkung
der Federbelastung ausweichen kann; über die sich an die
Leerstellung anschließende Dämpfbremsstellung der Bremseinrichtung steigt die Charakteristik der Verriegelungseinrichtung zweckmäßig zur Verriegelungsstellung an, so
daß der Stückgutträger bereits in dieser Phase quer zur
Laufrichtung genau ausgerichtet wird, wobei diese Verriegelungsstellung zweckmäßig ununterbrochen bis zum Ende
der Arretierbremsstellung reicht, die dann aufgehoben
wird, wenn der Stückgutträger nach Indexierung in einer
Stellung entweder zum Abtransport oder zur Überführung
in eine weitere zu indexierende Stellung bewegt werden
soll.

Die Synchronisierung von Bremseinrichtung und Verriegelungseinrichtung läßt sich besonders einfach erreichen, wenn
die Kurvenscheibe der Verriegelungseinrichtung auf derselben Welle wie die Nockenkurve der Bremseinrichtung angeordnet ist, wobei dann der Läufer der Verriegelungseinrichtung als Anschlag für die am bewegbar angeordneten
Träger gelagerte Kurvenscheibe an der Konsole angeordnet
ist. Insbesondere wenn die Andrückeinrichtung durch die
Feststellbremse gebildet ist, ist es aber auch in vorteilhafter Weise möglich, die Bremseinrichtung und damit die
Welle sowohl für die Nockenkurve als auch für die Kurvenscheibe an der Konsole zu lagern, wobei in diesem Falle
der Läufer der Verriegelungs-Einrichtung am bewegbar gelagerten Träger vorgesehen ist. Ist wenigstens eine
der beiden Kurvenscheiben gegenüber der Welle stufenlos
drehbar und in jeder Stellung festsetzbar, so können die
beiden Kurven in einfacher Weise zueinander den jeweiligen
Erfordernissen entsprechend justiert werden.

Die Überführung des Indexiergliedes in den Eingriff mit
der Arretierleiste des einlaufenden Stückgutträgers wird
erleichtert, wenn wenigstens in Einlaufrichtung des Stückgutträgers vor dem Indexierglied ein annähernd so weit
wie, insbesondere geringfügig weniger weit als, das Indexierglied in die Laufbahn des Stückgutträgers ragender Abweisläufer an dem Träger vorgesehen ist, welcher bei zu weit
in die Laufbahn des Stückgutträgers ragendem Indexierglied
dafür sorgt, daß dieses etwas aus der Laufbahn zurückbewegt
wird, während der Abweisläufer dann, wenn das Indexierglied in Eingriff mit der Arretierleiste steht, außer Eingriff mit dem Stückgutträger ist, so daß die Genauigkeit
des Eingriffes des Indexiergliedes nicht beeinträchtigt
wird. Durch den Abweisläufer werden auch Toleranzunterschiede in der Breite der Stückgutträger ausgeglichen.
Sind in Laufrichtung beiderseits des Indexiergliedes,
vorzugsweise mit gleichen Abständen und/oder gleichartig
ausgebildete Abweisläufer angeordnet, so ist die Indexier-
Einrichtung für den Einlauf von Stückgutträgern in beiden
möglichen, entgegengesetzten Laufrichtungen noch besser
geeignet. Bei einer einfachen, raumsparenden Ausbildung
liegt der Abweisläufer im Bewegungsbereich der Arretierleiste des Stückgutträgers, wobei er vorzugsweise durch
eine Rolle gebildet ist, die um eine zum Indexierglied
parallele Achse drehbar gelagert ist. Insbesondere, wenn
die Indexier-Einrichtung in beiden entgegengesetzten Laufrichtungen verwendet werden kann, eignet sie sich auch für
sog. Skelettband-Systeme, bei welchen von einer zentralen
Förderstraße Abzweig-Förderstrecken zu den einzelnen Arbeitsstationen führen.

Eine besonders vorteilhafte Weiterbildung des Erfindungsgegenstandes besteht darin, daß die Wegmeßeinrichtung,
die beispielsweise auch mit einem induktiven oder
kapazitiven Fühler ausgestattet sein könnte, als Tastglied ein an einer Meßleiste des Stückgutträgers, insbesondere an der Arretierleiste, abwälzendes Meßglied,
beispielsweise ein Meßrad, aufweist, das vorzugsweise
etwa achsgleich und/oder quer zur Laufrichtung des
Stückgutträgers unmittelbar benachbart zum Indexierglied liegt. Dadurch gelangen das Tastglied und das
Indexierglied gleichzeitig in und außer Eingriff mit
dem Stückgutträger, und beide Glieder sind stets - in Bezug auf die Laufrichtung - in genau demselben Längsabschnitt des Stückgutträgers wirksam.

Damit das Meßrad unabhängig vom Indexierglied und somit
mit einer eine hohe Meßgenauigkeit gewährleistenden,
verhältnismäßig geringen Tastkraft, in den Stückgutträger eingreifen kann, ist das Meßrad an einem gesonderten, quer zur Laufebene der Meßleiste an der Konsole
bewegbar, insbesondere um dieselbe Achse wie der Träger
des Indexiergliedes schwenkbar gelagerten Meßträger angeordnet und vorzugsweise zur Eingriffsstellung, beispielsweise durch eine an dem Träger angreifende Feder, federbelastet. Zum Schutz vor Beschädigungen ist das Meßrad
gegen Eingriffsbewegungsrichtung gegenüber dem Indexierglied bewegbar, so daß es in dieser Bewegungsrichtung
auch dann zurückweichen kann, wenn das Indexierglied
durch die Andrückeinrichtung gegen eine solche Bewegung
verriegelt ist. Zweckmäßig ist jedoch das Meßrad entgegen
Eingriffsbewegungsrichtung über einen Schlepp-Mitnehmer,
insbesondere ein Ritzel, mit dem Indexierglied gekoppelt;
dadurch wird insbesondere während des Einlaufes des Stückgutträgers auch das Meßrad über das Indexierglied in eine optimale Einlaufstellung überführt, welche
eine hohe Präzision des Beginns der Messung gewährleistet.

Es ist denkbar, das Indexierglied oder das Meßrad als
Reibrad oder dgl. auszubilden. Eine besonders hohe Genauigkeit ergibt sich jedoch, wenn das Indexierglied
und/oder das Meßrad als Zahnräder ausgebildet sind, so
daß sich ein - bezogen auf die Laufrichtung - formschlüssiger Eingriff in den Stückgutträger ergibt. Das
Indexierglied braucht in diesem Falle kein Zahnrad
besonders hoher Genauigkeit sein, da die Indexiergenauigkeit allein von der Meßgenauigkeit der Wegmeßeinrichtung und vom spielfreien Eingriff des Indexiergliedes in den Stückgutträger in Andrückstellung abhängt;
beispielsweise kann das Indexierglied als Zahnrad aus
Kunststoff ausgebildet sein, das einen sehr leisen Lauf
und selbst im Falle einer ungehärteten Arretierleiste
einen praktisch verschleißfreien Betrieb gewährleistet.
Das hinsichtlich seines Zahnkranzes mit hoher
Genauigkeit ausgestattete Meßrad, das selbst kaum
Kräfte überträgt, wird vor dem Einlauf des Stückgutträgers zweckmäßig durch ein Zahn-Ritzel gegenüber der
Zahnung des Indexiergliedes ausgerichtet, wobei das Zahn-
Ritzel gleichzeitig in die Zahnung des Indexierrades und
in die Zahnung des Meßrades eingreift und in einfacher
Weise gleichzeitig den Schleppmitnehmer bildet. Während
des Eingriffes in den Stückgutträger werden das Indexierglied und das Meßglied dagegen durch die entsprechende,
die Arretier- und Meßleiste bildende, Zahnstange des
Stückgutträgers ausgerichtet und synchronisiert.

Nach einem weiteren Merkmal der Erfindung ist das Meßrad,
vorzugsweise über einen Zahnriemen-Trieb, mit der zugehörigen Meß- und Steuereinrichtung, insbesondere einem Inkrementalgeber, antriebsverbunden. Durch den Präzisions-Zahnriemenbetrieb wird die vom Meßglied mechanisch ertastete Wegstrecke des Stückgutträgers mechanisch auf den
Inkrementalgeber übertragen, welcher beispielsweise über
Lage- und Geschwindigkeitsregler den Stellmotor bzw. die
Kupplung des Indexiergliedes sowie die Bremse beeinflußt.

Die erfindungsgemäße Einrichtung ist auch für andere
Systeme, z.B. als Zwischeneinheit bei Anlagen mit Förderbandtransport, geeignet. Sie eignet sich insbesondere als
Zwischenantrieb bei rauhem Betrieb, wenn beispielsweise
schwere und/oder stark verschmutzte Werkstücke vorhanden
sind. Auch ermöglicht es die erfindungsgemäße Einrichtung,
Stückgutträger zu verwenden, die in Laufrichtung extrem
kurz sind. Die erfindungsgemäße Einrichtung hat in Laufrichtung selbst eine sehr geringe Ausdehnung, so daß
gleiche oder ähnliche Einrichtungen in Laufrichtung hintereinander in geringen Abständen angeordnet werden
können.

Die Erfindung ist insbesondere vorteilhaft in Verbindung
mit System anwendbar, wie sie in der DE-OS 31 12 911 und
der EP-A-0 062 267 sowie in der DE-AS-P 33 13 005.1 beschrieben sind, auf die wegen Einzelheiten und der Funktion hiermit Bezug genommen wird.

Diese und weitere Merkmale von bevorzugten Weiterbildungen der Erfindung gehen auch aus den Unteransprüchen und
der Beschreibung und Zeichnung hervor, wobei die einzelnen Merkmale jeweils für sich allein oder zu mehreren
in Form von Unterkombinationen bei einer Ausführungsform
der Erfindung und auf anderen Gebieten vorteilhaft sein
können.
Die Erfindung wird im folgenden mit weiteren Einzelheiten
anhand des in den Zeichnungen dargestellten Ausführungsbeispieles näher erläutert. Es sind dargestellt in

Fig. 1 eine schematische Draufsicht auf ein Ausführungsbeispiel eines Fertigungs- und Montagesystems,

Fig. 2 ein Stückgutträger des Systems gemäß Fig. 1 in
Unteransicht,

Fig. 3    eine Indexier-Einrichtung des Systems gemäß

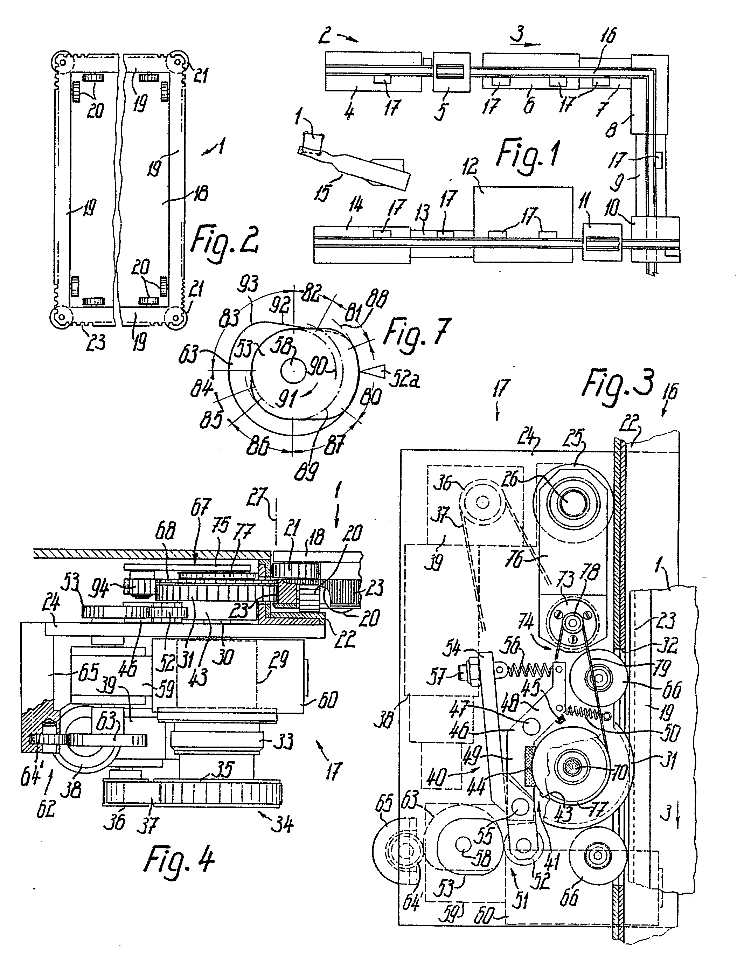

          Fig. 1 in teilweise geschnittener bzw. aufgebrochener Draufsicht,

Fig. 4    die Indexier-Einrichtung gemäß Fig. 3 entgegen Laufrichtung gesehen und teilweise geschnitten,

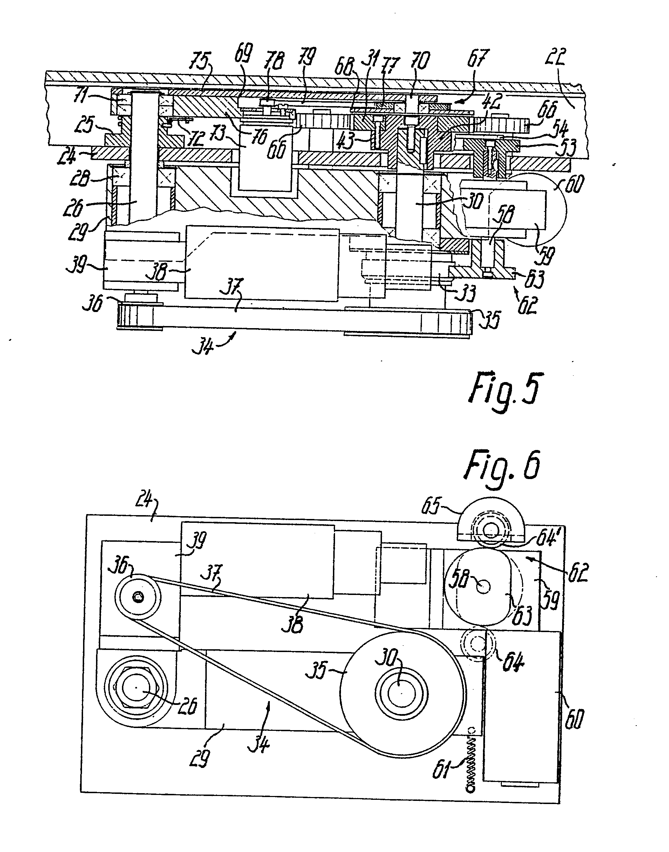

Fig. 5    die Indexier-Einrichtung gemäß Fig. 4 in teilweise geschnittener Ansicht von links,

Fig. 6    die Indexier-Einrichtung gem. Fig. 5 in Ansicht
          von unten,

Fig. 7    die beiden Steuerkurven der Indexier-Einrichtung
          gemäß den Figuren 3 bis 6 in einer deckungsgleichen Funktionsdarstellung.

Das in Fig. 1 dargestellte Fertigungs- und Montage-
System dient zur Durchführung von Arbeitsgängen an nicht
näher dargestellten Werkstücken, von denen jeweils je nach
Größe eines oder mehrere auf einem Werkstückträger bzw.
Stückgutträger 1 angeordnet und beispielsweise durch
Spannung bzw. in Stückgutaufnahmen festgesetzt sind. Der
in Draufsicht quadratische Stückgutträger 1 soll zur Behandlung bzw. Bearbeitung der Werkstücke eine beispielsweise als Transferstraße gestaltete Förderstraße 2 durchlaufen, welche aus aneinander anschließenden, beispielsweise im Winkel zueinander stehenden Abschnitten besteht,
die jeweils eine genau definierte Laufrichtung  Pfeil 3
des Stückgutträgers 1 bestimmen. Die Straße besteht
zweckmäßig aus hintereinander angeordneten einzelnen Einheiten, die voneinander gesonderte Antriebe aufweisen und
keine mechanischen Antriebsteile haben, die von einer
Einheit bzw. Station zur anderen herüberreichen, so daß

- 13 -                                                0203217

sie wie Tische oder Bänke hintereinander gestellt und
dadurch einfach unterschiedlichen Erfordernissen angepaßt und umgerüstet werden können. Entlang der Straße
befinden sich Arbeitsstationen zur Bearbeitung und/oder
Montage und/oder Änderung der Laufrichtung bzw. der
Laufstrecke der Stückgutträger 1 und/oder für andere
Behandlungen der Werkstücke. Im dargestellten Ausführungsbeispiel steht am Anfang der Straße 2 als erste
Arbeitsstation eine Beladestation 4. Ein sog. Handhabungsautomat bzw. Industrieroboter 15, d.h. ein Gerät, das
durch Programme und Fühler gesteuert, handarbeitsähnliche
Tätigkeiten vornehmen kann und in Reichweite der Beladestation 4 steht, greift den Stückgutträger 1 und setzt
ihn auf die durch Laufschienen gebildete Führungsbahn 16
der Straße 2. Die Führungsbahn 16 geht bei entsprechender
Einstellung der Straße 2 kontinuierlich von der Beladestation 4 durch bis zu einer Entladestation 14, welche an
einem Ende der Straße 2 steht.

Der Stückgutträger 1 wird in der Führungsbahn 16 der Beladestation 4 durch Antriebseinrichtungen 17 übernommen
und entlang der Führungsbahn 16 bewegt. In Laufrichtung
 Pfeil 3  folgt auf die Beladestation 4 im dargestellten
Ausführungsbeispiel eine Puffereinheit 5, durch welche
eine Pufferung geschaffen wird, um bei Störungen oder
Stockungen den Betrieb aufrechterhalten zu können. Von
der Puffereinheit 5 gelangt der Stückgutträger 1 in eine
Indexier-Einheit 6, welche zur genauesten Positionierung
des Stückgutträgers 1 und damit der Werkstücke, beispielsweise für automatische Arbeiten oder Montageoperationen,
dient, bei welchen es auf eine Positionierung ankommt, die
genauer ist als beispielsweise 0,5 bis 1 mm, wobei durch
die erfindungsgemäße Ausbildung auch eine Genauigkeit bis
in Bereiche von 100stel Millimeter erreicht werden kann.

Auf diese Indexier-Einheit 6 folgt in Laufrichtung
Pfeil 3 eine Transporteinheit 7, welche auch als
Zwischenspeicher und/oder als eine Arbeitsstation für
die Durchführung manueller Arbeiten verwendet werden
kann. An die Transporteinheit 7 schließt sich eine
weitere Arbeitsstation 8 an, deren Führungsbahn an der
Eingangsseite in Laufrichtung des vorangehenden Abschnittes der Straße und an der Ausgangsseite in einer
dazu rechtwinkligen Laufrichtung liegt. Der Stückgutträger wird dabei beim Übergang von einer Laufrichtung
zur nächsten nicht gedreht, sondern bleibt in Bezug auf
seine vertikale Mittelachse lageunverändert, d.h. daß
seine im vorangehenden Abschnitt parallel zur Laufrichtung Pfeil 3 liegenden Außenkanten im darauffolgenden
Abschnitt der Straße rechtwinklig zur dann gegebenen
Laufrichtung liegen. An die Arbeitsstation 8 schließt
sich eine weitere Transporteinheit 9 und an diese eine
Schwenkeinheit 10 an, welche je nach Schwenkstellung den
Stückgutträger 1 auf den folgenden Abschnitt der Straße 2
übergeben oder ihn auf eine von der Straße 2 wegführende
Laufbahn leiten kann. Auf die Schwenkeinheit 10 der in
U-förmiger Anordnung vorgesehenen Straße 2 folgt eine
weitere Puffereinheit 11, an welche sich eine Arbeitsstation 12 für überwiegend manuelle Arbeitsgänge anschließt,
die wiederum von einer Transporteinheit 13 gefolgt wird,
an welche sich schließlich die Entladestation 14 anschließt. Die beschriebenen Arbeitsstationen dienen lediglich zur Darstellung eines Beispieles; sie können im wesentlichen beliebig gegeneinander ausgetauscht und/oder
durch anders geartete Arbeitsstationen ersetzt werden.
Ferner können Abschnitte bzw. Einheiten der Straße für
die reversible Bewegung der Stückgutträger 1 vorgesehen
sein, d.h. daß sich der Stückgutträger dann auf ein und
demselben Abschnitt bzw. in ein und derselben Einheit aufeinanderfolgend in entgegengesetzten Richtungen bewegt.
Der Handhabungsautomat 15 befindet sich zwischen der Beladestation 4 und der Entladestation 14, so daß er außer
zum Beladen auch dafür dient, die Stückgutträger von der
Entladestation 14 abzunehmen.

Entlang der Führungsbahn 16 befindet sich eine Anzahl von
Antriebs-Einrichtungen 17, die jeweils Bestandteil einer
Einheit sind, wobei je nach den Erfordernissen einzelne
oder alle Antriebs-Einrichtungen durch die erfindungsgemäße Indexier-Einheit gemäß den Figuren 3 bis 7 gebildet sein können. Die Steuerung der Antriebs- bzw.
Indexier-Einrichtungen 17 sowie des übrigen Systems,
d.h. auch des Handhabungsautomaten 15 und der einzelnen
Arbeitsstationen erfolgt dezentral über nicht näher dargestellte Steuereinrichtungen, die jeder einzelnen Arbeitsstation zugeordnet sind. Jede Steuereinrichtung steuert
in Abhängigkeit von Meßsignalen, manuellen Eingaben bzw.
Betätigungen und Programmen sowie in Abhängigkeit von
Daten, die sie jeweils von mindestens einer davor und/
oder danach angeordneten Einheit erhält, die jeweilige
Einheit und ggf. die daran angeordneten Maschinen und
gibt über rein elektrische Verknüpfungen die notwendigen
Signale an die Folgeeinheiten weiter. Das System kann
somit unabhängig von einer Zentralsteuerung arbeiten, ist
weniger störungsanfällig und ohne einen Eingriff in die
Steuerung auch umzurüsten. Die Signalverbindung zwischen
den einzelnen Einheiten kann über eine für alle entsprechenden Systeme normierte Schnittstelle erfolgen.

Der in Fig. 2 dargestellte Stückgutträger 1 weist beispielsweise einen plattenförmigen, im wesentlichen quadratischen
Grundkörper 18 auf, an dessen Unterseite benachbart zu
seinen Außenkanten und parallel zu diesen Leisten 19 in Form
von Zahnstangen angeordnet sind, die gleichzeitig als Meß-

0203217

leisten, Antriebsleisten und Arretierleisten dienen. Die
Zahnungen der Leiste 19 liegen jeweils zur zugehörigen
Außenseite des Stückgutträgers 1 hin. An den Innenseiten
der Leisten 19 sind Laufrollen 20 derart gelagert, daß
die Rollenachse jeder Laufrolle rechtwinklig zur zugehörigen
Leiste 19 und parallel zu der durch den Grundkörper 18
definierten Ebene des Stückgutträgers 1, also parallel zu
dessen Laufebene, liegt. Jeweils zwei Laufrollen 20 mit
zueinander rechtwinkligen Rollenachsen sind benachbart zu
jeder der vier Ecken vorgesehen, die jeweils durch zwei
aneinander anschließende Enden zweier im Winkel zueinander
liegender Leisten 19 gebildet sind. Die gleich großen Laufrollen 20 liegen in Bezug auf die Ebene des Stückgutträgers
1 in gleicher Höhe und stehen geringfügig über die durch
die Leisten 19 gebildete Unterseite des Stückgutträgers 1
vor. Im Grundkörper 18 sind ferner an den vier Ecken des
Stückgutträgers 1 Vertiefungen vorgesehen, in denen an jeder
Ecke eine Bandenrolle 21 derart um eine zur Laufebene des
Stückgutträgers 1 rechtwinklige Achse drehbar gelagert ist,
daß sie über beide, die zugehörige Ecke des Stückgutträgers
1 bildende Außenkante gleich weit, jedoch nur mit einem
Bruchteil ihres Durchmessers vorsteht. Die Führungsbahn 16
der Straße 2 ist in jedem Abschnitt bzw. Teilabschnitt durch
zwei im Abstand nebeneinanderliegende, L-förmige Laufschienen
22 gemäß Fig. 4 gebildet, deren im Querschnitt zueinander
gerichtete horizontale Schenkel in einer gemeinsamen Ebene
liegen und zur Auflage jeweils derjenigen Laufrollen 20
dienen, deren Rollenachsen zur zugehörigen Laufrichtung rechtwinklig liegen; die Anordnung ist dabei gemäß Fig. 4 so getroffen, daß die anderen Laufrollen 20, deren Rollenachsen
parallel zur jeweils gegebenen Laufrichtung liegen, berührungsfrei zwischen den Laufschienen 22 vorgesehen sind.
An den vertikalen Schenkeln der beiden Laufschienen 22 sind jeweils alle Bandenrollen 21 geführt, so daß der
Stückgutträger 1 auch quer zur Laufrichtung genau gegenüber
der Führungsbahn ausgerichtet ist. Jede Antriebs- bzw.
Indexier-Einrichtung 17 weist ein Zahnrad auf, welches
eine fensterartige Öffnung im vertikalen Schenkel der
zugehörigen Laufschiene 22 durchsetzt und mit zur Laufebene
der Stückgutträger 1 rechtwinkliger Achse so ausgerichtet
ist, daß es beim Durchlauf eines Stückgutträgers 1 in
formschüssigen Eingriff mit der Zahnung 23 der zugehörigen
Leiste 19 kommt. Wenigstens die Zahnräder der Antriebseinrichtungen, zweckmäßigerweise aber auch die Zahnräder der
Indexier-Einrichtungen sind vorteilhaft unter Zwischenschaltung von Freiläufen angetrieben, so daß aufeinander
folgende und unabhängig voneinander angetriebene Zahnräder
ohne die Gefahr einer Beschädigung gleichzeitig in Eingriff
mit ein und derselben Zahnstange sein können.

In den Figuren 3 bis 7 ist eine auch für den Antrieb der
Stückgutträger 1 in Laufrichtung  Teil 3 entlang der Führungsbahn 16 geeignete Indexier-Einrichtung 17 dargestellt. Diese
weist eine plattenförmige Konsole 24 auf , welche an der
Unterseite des horizontalen Schenkels der zugehörigen Laufschiene 22 derart befestigt ist, daß ihre innere Längskante
mit der inneren, freien Längskante dieses Schenkels bündig
abschließt und daß sie über die Außenseite des vertikalen
Schenkels der Laufschiene 22 parallel zur Laufebene des
Stückgutträgers 1 vorsteht. Benachbart zu einer Schmalseite
ist an der Konsole 24 mit einer an deren Oberseite angeordneten Haltemuffe 25 ein durchgehend zylinderischer Achsbolze:
26 befestigt, dessen Mittelachse rechtwinklig zur Laufebene
der Stückgutträger 1 bzw. parallel zu der dazu rechtwinkligen
Laufebene 27 der sich in Laufrichtung Pfeil 3 erstreckenden
Leisten 19 liegt. Der Achsbolzen 26 steht so nach oben wie auch nach unten über die Konsole 24 vor. Unmittelbar
unterhalb der Konsole 24 ist auf dem Achsbolzen 26 mit
Wälzlagern 28 ein nach Art eines einarmigen Hebels ausgebildeter Träger 29 schwenkbar gelagert, der von dem Achsbolzen 26 bis zum gegenüberliegenden Ende der Konsole
24 reicht. Benachbart zu dem vom Achsbolzen 26 abgekehrten
Ende ist in dem Träger 29 eine Welle 30 mit Wälzlagern um
eine zur Laufebene der Stückgutträger 1 rechtwinklige bzw.
zur Laufebene 27 parallele und zur Laufrichtung Pfeil 3
rechtwinklige Achse drehbar gelagert. Die Welle 30 ragt
durch eine Öffnung in der Konsole 24 bis an deren Oberseite
und trägt an ihrem oberen Ende ein Indexierglied 31 in Form
eines Zahnrades. Dieses Zahnrad liegt in Höhe der Zahnung
23 der ihm zugekehrten Leiste 19 des jeweils auf der Laufschiene 22 befindlichen Stückgutträgers 1, derart, daß oberhalb des Zahnrades noch etwa ein Viertel der Breite der
Zahnleiste frei bleibt. Der der Führungsbahn 16 zugekehrte
Umfangsabschnitt des im Durchmesser verhältnismäßig großen,
umfangsverzahnten Indexiergliedes 31 ragt durch eine fensterartige Öffnung 32 im aufrechten Schenkel der Laufschiene 22
über die durch den waagerechten Schenkel gebildete Laufbahn
für die Rollen 20. Sie liegt dabei etwa in einer zur Laufrichtung Pfeil 3 parallelen gemeinsamen Axialebene mit der
Schwenkachse des Trägers 29. An ihrem an der Unterseite aus
dem Träger 29 geführten Ende ist die Welle 30 unter Zwischenschaltung einer Kupplung 33 mit der Riemenscheibe 35 eines
beispielsweise als Zahnriementrieb ausgebildeten Getriebes
34 versehen, wobei die Kupplung 33 als Schaltkupplung und/
oder Freilauf ausgebildet sein kann. Der Zahnriementrieb 34
wird über einen Stellmotor 38 angetrieben, der unmittelbar
oberhalb des Zahnriementriebes 34 mit zur Konsole 24 paralleler
Achse am Träger 29 befestigt ist und an seinem zum Achsbolzen
26 benachbarten Ende ein Winkelgetriebe 39 aufweist, das auf seiner über seine Unterseite vorstehenden Abtriebswelle
die Antriebsriemenscheibe 36 trägt, die wesentlich kleiner
als die Riemenscheibe 35 und mit dieser über den Zahnriemen 37 antriebsverbunden ist.

Am Träger 29 ist ferner eine im wesentlichen unmittelbar
benachbart zur Oberseite der Konsole 24 liegende Bremseinrichtung 40 vorgesehen, die eine Feststellbremse 41
für das Indexierglied 31 aufweist. Die Bremseinrichtung
40 weist eine Bremsnabe 42 auf, welche am oberen Ende der
Welle 30 befestigt ist und an einem oberen, im Durchmesser
reduzierten Flanschansatz das Indexierglied 31 formstarr
trägt, derart, daß die Bremsnabe 42 die Radnabe des kreisringförmigen Indexiergliedes 31 bildet. Die zylindrische
Umfangsfläche bildet die sich zwischen der Unterseite des
Indexiergliedes 31 und der Oberseite der Konsole 24 erstreckende Bremsfläche 43 für zwei Bremsglieder, von denen
eines als Arretier-Bremsglied 44 und das andere als Dämpf-
Bremsglied 45 vogesehen ist. Die Bremsglieder 44, 45 sind
an einem zweiarmigen Bremshebel 46 vorgesehen, der um eine
an der Konsole 24 oder bei einer anderen denkbaren Ausführungsform am Träger 29 angeordnete Lenkerachse 47
schwenkbar gelagert ist; die zur Achse der Bremsfläche 43 parallele
Lenkerachse 47 liegt benachbart zur Bremsfläche 43 und mit deren Mittelachse in einer gemeinsamen Axialebene, die unter einem sich
zum Achsbolzen 26 öffnenden Winkel von etwa 45° zur Laufebene 27 liegt. Die beiden Arme 48, 49 des Bremshebels 46
sind unter einem sich zur Bremsfläche 43 hin öffnenden
stumpfen Winkel zueinander vorgesehen, wobei der zur Laufrichtung Pfeil 3 etwa parallele Arm 49 an seiner Innenseite
das Arretier-Bremsglied 44 und der andere, zum Achsbolzen
26 hin anschließende Arm 48 das Dämpf-Bremsglied 45 trägt.
In der in Fig. 3 dargestellten Schwenklage liegt das Arretier-
Bremsglied 44 an der Bremsfläche 43 an, während das Dämpf-

0203217

-Bremsglied 45 von der Bremsfläche abgehoben ist. In einer anderen, demgegenüber gemäß Fig. 3 im Uhrzeigersinn verschwenkten Stellung des Bremshebels liegt das Dämpf-Bremsglied 45 an der Bremsfläche 43 an, während das Arretier-Bremsglied 44 von der Bremsfläche abgehoben ist; in einer Zwischenstellung zwischen diesen beiden Stellungen sind somit beide Bremsglieder 44,45 vollständig von der Bremsfläche 43 abgehoben, so daß sich eine ungebremste Leerstellung der Bremseinrichtung 40 ergibt. Zur genannten Dämpfbremsstellung ist der Bremshebel 46 mit einer Zugfeder 50 belastet, durch welche der Bremsdruck bestimmt ist, mit welchem das Dämpf-Bremsglied 45 an der Bremsfläche 43 anliegt.

Am freien Ende des das Arretier-Bremsglied 44 tragenden Armes 49 des Bremshebels 46 greift eine Betätigungseinrichtung 51 für die Bremse an, welche als Kurvensteuerung ausgebildet ist. Zu diesem Zweck ist am freien Ende des Armes 49 ein Läufer 52 in Form einer Laufrolle drehbar gelagert, welcher am Umfang einer Nockenkurve 53 unter der Kraft der Feder 50 geführt ist. Zwischen dem Läufer 52 und dem Arretier-Bremsglied 44 ist der Arm 49 zweiteilig ausgebildet, wobei ein Hebelteil formstabil mit dem Arm 48 verbunden und an diesem Hebelteil ein weiterer Hebelteil 54 um eine zur Lenkachse 47 parallele Achse 55 schwenkbar gelagert ist; diese Achse liegt zwischen dem Arretier-Bremsglied 44 und dem Läufer 52. Der als zweiarmiger Hebel ausgebildete Hebelteil 54 trägt am Ende seiner in Verlängerung des Armes 49 liegenden Armes den Läufer 52, während der andere, nach außen abgeköpfte, wesentlich längere Arm bis in dem Bereich des Armes 48 geführt und in diesem Bereich über eine vorgespannte Feder 56 mit dem Ende des Armes 48 verbunden ist. Am Hebelteil 54 ist die gegenüber der Feder 50 wesentlich kräftigere Feder 56 über ein Justierglied 57 befestigt, so daß die Vorspannung der Feder 56 verändert werden kann.

Die Nockenkurve 53 liegt an der von der Laufschiene 22 abgekehrten Seite des Läufers 52 an, derart, daß die gemeinsame Axialebene des Läufers 52 und der Nockenkurve 53 etwa rechtwinklig zur Laufrichtung Pfeil 3 vorgesehen ist. Die Nockenkurve 53 ist am oberen Ende einer Welle 58 verdrehgesichert befestigt, welche als Abtriebswelle eines an der Unterseite der Konsole 24 oder bei der anderen Ausführungsform unmittelbar unterhalb der Konsole 24 am Träger 29 bestigten Winkelgetriebes 59 vorgesehen ist. Das Winkelgetriebe 59 wird von einem angeflanschten Stellmotor 60 angetrieben, welcher unmittelbar unterhalb der Konsole 24 mit zu dieser etwa paralleler und zur Laufrichtung Pfeil 3 etwa rechtwinkliger Mittelachse derart angeordnet ist, daß er bis unter die Laufschiene 22 reicht.

Der Träger 29 und damit das Indexierglied 31 sind zu der Stellung, in welcher das Indexierglied 31 in den Stückgutträger 1 eingreift, mit einer Feder 61 belastet, wobei diese Feder 61 so ausgelegt ist, daß sie das Indexierglied 31 nur mit mäßiger Kraft in Eingriff mit der Zahnung 23 des Stückgutträgers 1 bringt und dann hält. Für den verriegelten Eingriff des Indexiergliedes 31 in die Zahnung 23 des Stückgutträgers 1 ist an der Unterseite der Konsole 24 eine kurvengesteuerte Verriegelungseinrichtung 62 vorgesehen. Diese Verriegelungseinrichtung weist eine auf der zur Welle 30 parallel stehenden Welle 58 unterhalb der Nockenkurve 53, im dargestellten Ausführungsbeispiel an der Unterseite des Winkelgetriebes 59, angeordnete Kurvenscheibe 63 auf, die im wesentlichen als einseitig abgeflachte Teilkreisscheibe mit kontinuierlich abgerundeten Übergänge zwischen dem Kreissegment und der Abflachung ausgebildet ist. Der Umfang dieser Kurvenscheibe 63 ist als Anschlag für einen Läufer 64, nämlich eine Laufrolle vorgesehen, welche bei der Ausführungsform, bei welcher die Bremseinrichtung an der
Konsole 24 gelagert ist, in der in Fig. 6 strichpunktiert angedeuteten Ausbildung am Träger 29 angeordnet
ist und auf der der Laufebene 27 zugekehrten Seite der
Kurvenscheibe 63 liegt. Bei der anderen Ausführungsform,
bei welcher die Bremseinrichtung 40 am Träger 29 angeordnet ist, stützt sich der Umfang der in diesem Fall gegenüber der ersten Ausführungsform um 180° verdreht vorgesehenen Kurvenscheibe 63 zweckmäßig an einem Läufer 64'
ab, welcher über einen geeigneten Halter 65 an der Konsole 24 gelagert ist und in Draufsicht gemäß Fig. 3
an der von der Laufschiene 22 abgekehrten Seite der
Kurvenscheibe 63 anliegt. Zur Erzielung günstigerer
Kräfteverhältnisse kann die Kurvenscheibe 63 auch unmittelbar unterhalb der Nockenkurve 53 zwischen der Unterseite der Konsole 24 und der Oberseite des Winkelgetriebes 59 an dessen oberen, entsprechend verlängerten Wellenzapfen angeordnet sein. Sie ist zweckmäßig verdrehbar und
festsetzbar auf der Welle 58 angeordnet, so daß sie gegenüber der Nockenkurve 53 in Drehrichtung genau eingestellt
werden kann.

In Laufrichtung Pfeil 3 beiderseits benachbart zum Indexierglied 31 sind zwei Abweisläufer 66 in Form von Rollen vorgesehen, die im Durchmesser kleiner als das Indexierglied 31
und um zu diesem parallele Achsen drehbar am Träger 29 gelagert sind. Diese Abweisläufer 66 liegen in Höhe des Indexiergliedes 31 und haben etwa gleiche Axialerstreckung wie dieses,
jedoch keine Umfangsverzahnung sondern zylinderische Umfangsflächen. In Arbeitslage, in welcher das Indexierglied 31
vollständig in die Zahnung 23 eines Stückgutträgers 1 eingreift, liegen die Umfangsflächen der Abweisläufer 66 mit
geringem Spielabstand berührungsfrei von der jeweils in
Eingriff stehenden Leiste 19 und damit vom gesamten Stückgutträger 1. Wenn das Indexierglied 31 jedoch nicht in Eingriff mit einem Stückgutträger 1 steht und daher durch die
Feder 61 ein wenig weiter, als in Fig. 3 dargestellt,in die Laufschiene 22 ragt, liegen die Abweisläufer 66 im Bewegungsweg des Stückgutträgers 1. Je nachdem, von welcher Seite her ein Stückgutträger in Richtung zum Indexierglied 31 einläuft, erfaßt dieser Stückgutträger 1 mit den Kopfflächen seiner Zahnung 23 den in seiner Einlaufrichtung zuerst kommenden Abweisläufer 66, so daß dieser unter Mitnahme des Trägers 29 und damit des Indexiergliedes 31 entgegen Eingriffsbewegungsrichtung zurückgedrückt wird und das Indexierglied 31 schadlos in Eingriff mit der Zahnung 23 gelangen kann.

Für die Steuerung der Indexier-Einrichtung ist ferner eine Wegmeßeinrichtung 67 vorgesehen, durch welche anhand einer Abtastung der vom Stückgutträger in und entgegen Laufrichtung zurückgelegten Wege die genaue Position des Stückgutträgers bestimmt und bei Erreichen der vorbestimmten Position die Arretierung des Stückgutträgers gesteuert wird. Die Wegmeßeinrichtung 67 weist ein Meßrad 68 auf, das achsparallel zum Indexierglied 31 mit geringem Spaltabstand benachbart zu dessen oberer Stirnfläche liegt und hinsichtlich seiner Achslage gegenüber dem Indexierglied 31 beweglich ist. In einer Stellung greift das Meßrad 68 abwälzend - bezogen auf die zur Laufrichtung Pfeil 3 parallele Längserstreckung - an genau derselben Stelle wie das Indexierglied 31 in den Stückgutträger 1 ein. Das Meßrad 68 ist am Umfang mit in wesentlichem derselben Verzahnung wie das Indexierglied 31 versehen, wobei die Verzahnung des Meßrades 68 jedoch mit hoher Präzision derart ausgestattet ist, daß es in seiner Drehrichtung spielfrei in die Verzahnung der entsprechenden Meßleiste des Stückgutträgers 1 eingreift. Diese Meßleiste ist in einfacher Ausbildung durch die Leiste 19 gebildet, in deren oberen, von dem Indexierglied 31 nicht erfassten Teil der Verzahnung 23 das Meßrad 68 eingreift. Im dargestellten Ausführungsbeispiel weist das Meßrad 68 hinsichtlich seiner Zahnung genau denselben Teilkreisdurchmesser wie das Indexierglied 31 auf, derart, daß das Indexierglied 31 und das Meßrad 68 achsgleich zueinander liegen, wenn sie beide in Funktionseingriff mit dem Stückgutträger 1 stehen, wobei auch das Meßrad 68 wie die Abweisläufer 66 durch die Fensteröffnung 32 in die Laufbahn des Stückgutträgers 1 ragt.

0203217

Das Meßrad 68, das gegenüber der Führungsbahn 16 quer
bzw. annähernd rechtwinklig zu seiner Eingriffsbewegungsrichtung bewegbar gelagert und in Eingriffsbewegungsrichtung unabhängig vom Indexierglied 31 federbelastet
ist, ist hängend an einem im wesentlichen plattenförmigen
Meßträger 69 gelagert, der zu diesem Zweck einen Achsbolzen
70 trägt, auf welchem das Meßrad 68 wälzgelagert ist. Der
Meßträger 69 ist mit Wälzlagern 71 auf dem oberen, über
die Haltemuffe 25 vorstehenden Ende des Achsbolzens 26 schwenkbar gelagert und ragt von diesem nach Art eines einarmigen
Hebels frei aus. Als Feder 72 zur Federbelastung des Meßträgers 69 in Richtung zur Eingriffsstellung des Meßrades
68 kann beispielsweise an der Unterseite des Meßträgers
69 um den Achsbolzen 26 eine Schraubentorsionsfeder vorgesehen sein, welche den mäßigen Anpressdruck, mit welchem
das Meßrad 68 in Meßeingriff steht, genau festlegt und
konstant hält.

Zur steuerungstechnischen Verwertung der vom Meßrad 68
am Stückgutträger 1 abgetasteten Wegstrecken ist zwischen
dem Achsbolzen 26 und dem Meßrad 68 am Meßträger 69 eine
Meß- und Steuereinheit 73 in Form eines Inkrementalgebers
befestigt, auf welche das Meßrad 68 die abgetasteten Wege
über einen Präzisions-Zahnriementrieb 74 überträgt. Zu
diesem Zweck ist unmittelbar an der Oberseite des ringscheibenförmigen Meßrades 68 eine mit geringem Spaltabstand unterhalb einer den Achsbolzen 70 tragenden Deckplatte
75 des Meßträgers 69 liegende Zahnriemenscheibe 77 angeordnet, die kleineren Durchmesser als das Meßrad 68 aufweist und über einen Zahnriemen 79 mit einer Riemenscheibe
78 antriebsverbunden ist, welche auf der zur Achse des Meßrades 68 parallelen, oben liegenden Arbeitswelle der Meß-
und Steuereinheit 73 angeordnet und wesentlich kleiner als die Zahnriemenscheibe 77 ist. Der Meßträger weist außer
der in Fig. 3 nicht dargestellten Deckplatte 75 eine an
deren Unterseite befestigte Flanschplatte 76 auf, welche
die Wälzlager 71 trägt und nur bis zur Meß- und Steuereinheit 73 reicht, die in einer Flanschöffnung zentriert
hängend an der Flanschplatte 76 befestigt ist. Die Meß-
und Steuereinheit 73 ragt dabei durch Öffnungen in der
Konsole 24 und in der Oberseite des Trägers 29 nach unten.

Durch die beschriebene räumliche Anordnung der einzelnen
Teile bzw. Einheiten ergibt sich eine sehr kompakte Ausbildung der Indexier-Einrichtung. Um die Schwenkbewegungen
des Trägers 29 und des Meßträgers 69 gegeneinander sowie
beider Träger gegenüber der Konsole 24 nicht zu behindern,
durchsetzen die Nabe der Nockenkurve 53, ein Nabenansatz
der Bremsnabe 42,ggf.der die Lenkerachse 47 bildende Bolzen,
entsprechende Lagerbolzen der Abweisläufer 66 und die
Meß- und Steuereinheit 73 so große Öffnungen in der Konsole
24, daß bei den im Betrieb vorkommenden Schwenkausschlägen
keine gegenseitige Berührung stattfinden kann; entsprechend
groß ist auch die Öffnung im Träger 29, in welche die Meß-
und Steuereinheit 73 eingreift.

In Fig. 7 sind zur Verdeutlichung der von den Steuerkurven
ausgelösten Arbeitsfunktionen die Nockenkurve 53 und die
Kurvenscheibe 63 gegenüber den Figuren 3 bis 6 derart um
ihre Drehachse verdreht zueinander dargestellt, daß die
beiden Läufer 52 und 64 in dem in Fig. 7 symbolisch als
Dreieck dargestellten Läufer 52 a zusammenfallen. Die
Kurvenflächen beider Steuerkurven erstrecken sich durchgehend über 360°, wobei die Steuerkurven in den Figuren
3 bis 7 so dargestellt sind, daß sie gerade etwa in der
Mitte der Vollbremsstellung stehen. Der entsprechende, auf dem größten Steuerkreis 88 der Nockenkurve 53 liegende
und sich über einen Bogenwinkel von etwa 60° erstreckende
Kurvenabschnitt der Nockenkurve 53 ist mit 80 bezeichnet.
In dieser Stellung ist die Feststellbremse 41 mit maximaler
Bremswirkung scharf angezogen, d. h., daß das Indexierglied 31 den Stückgutträger 1 in Laufrichtung Pfeil 3
unbeweglich festsetzt; gleichzeitig liegt der Läufer 64
der Verriegelungseinrichtung 62 mit geringem Spielabstand
im Bereich des größten, sich über einen Bogenwinkel von
etwa 320° erstreckenden, ebenso wie der Kurvenabschnitt 80
achsgleich zur Drehachse liegenden kreisförmigen Kurvenabschnittes der Kurvenscheibe 63. Bei der Ausführungsform,
bei welcher das Arretier-Bremsglied 44 an der Konsole 24
gelagert ist, ist bei dieser Stellung durch den Bremsdruck
das Indexierglied 31 quer zur Laufrichtung Pfeil
3 maximal gegen die Leiste 19 des Stückgutträgers 1
gepreßt , welcher dadurch auch quer zur Laufrichtung gegenüber der Führungsbahn genau ausgerichtet ist. Als Widerlager für die Abstützung des Stückgutträgers 1 gegen diesen
Anpreßdruck kann beispielsweise der gegenüberliegende Abschnitt der nicht dargestellten zweiten Laufschiene der
Führungsbahn vorgesehen sein, an welcher der Stückgutträger
1 dann mit den entsprechenden Bandenrollen 21 anliegt. Entgegen Drehrichtungpfeil 91 der Nockenkurve 53 schließt sich
an deren Kurvenabschnitt 80 ein sich über einen Bogenwinkel
von etwa 40° erstreckender Kurvenabschnitt 81 an, der sich
durch konvex abgerundete Ausbildung vom Steuerkreis 88 an
einen Steuerkreis 89 kleineren Durchmessers im wesentlichen
kontinuierlich annähert. Dieser Kurvenabschnitt 81 fällt
zusammen mit einem von zwei abgerundeten Übergangsabschnitten
93, welche die im Steuerradius reduzierte Abflachung 92 der
Kurvenscheibe 63 mit deren übrigen, kreisförmigen Kurvenabschnitt verbinden. Während des Laufes des Läufers 52 entlang
des Kurvenabschnittes 81 wird die Anpresskraft des Arretier-
Bremsgliedes 44 an der Bremsfläche 43 allmählich gelockert,
bis es am Ende des Kurvenabschnittes 81 schließlich ganz von der Bremsfläche 43 abhebt. Gleichzeitig wird durch den entprechenden Übergangsabschnitt 93 der Kurvenscheibe 63 die . Verriegelung des Indexiergliedes 31 gegenüber der Leiste 19 . aufgehoben, wobei jedoch das Indexierglied 31 unter der Kraft der Feder 61 in Antriebseingriff mit der Leiste 19 bleibt. Entgegen Drehrichtung Pfeil 91 schließt sich an den Kurvenabschnitt 81 ein weiterer, sich über einen Bogenwinkel von etwa 30° erstreckender, annähernd geradliniger Kurvenabschnitt 82 an, der sich gegenüber der Drehachse radial an einen Steuerkreis 90 nochmals kleineren Durchmessers annähert und tangential in beide benachbarten Kurvenabschnitte 81, 83 übergeht. Über diesen Kurvenabschnitt 82 ist der Läufer 52 so weit freigegeben, daß das Arretier-Bremsglied 44 unter der Kraft der Feder 50 von der Bremsfläche 43 abgehoben ist, das Dämpfungsglied 45 die Bremsfläche 43 jedoch noch nicht erreicht hat; d.h., daß das Indexierglied 31 praktisch ungebremst ist und sich über diesen Kurvenabschnitt 82 eine Leerbremsstellung ergibt. Dieser Kurvenabschnitt 82 fällt etwa mit der ersten Hälfte der Abflachung 92 der Kurvenscheibe 63 zusammen, d.h., daß während dieser Steuerphase das Indexierglied. 31 ununterbrochen unverriegelt nur unter Federkraft in die Leiste 19 des Stückgutträgers 1 eingreift. Entgegen Drehrichtung Pfeil 91 schließt sich an den Kurvenabschnitt 82 der sich über einen Bogenwinkel von etwa 90° erstreckende und auf dem kleinsten Steuerkreis 9 der Nocken-kurve 53 liegende Kurvenabschnitt 83 an, durch welchen der Läufer 52 so weit freigegeben ist, daß das Dämpfbremsglied 45 unter der Kraft der Feder 50 an der Bremsfläche 43 anliegt, d.h., daß in der zugehörigen Steuerphase die Leichtgängigkeit des Laufes des Indexiergliedes 31 reibend so gedämpft wird, daß es beim Einlauf des Stückgutträgers 1 erst mitgenommen wird, wenn seine Zähne formschlüssig kämmend in die Verzahnung 23 des Stückgutträgers

0203217

1 eingreifen. In dieser Steuerphase wird also ein einwandfreies In-Eingriff-Bringen der Verzahnung des Indexiergliedes 23 mit der Verzahnung 23 des Stückträgers 1 während dessen
Einlauf erreicht. Etwa ein erstes Drittel des Kurvenabschnittes 82 fällt zusammen mit der zweiten Hälfte der Abflachung
92 der Kurvenscheibe 63, d. h., daß etwa während des ersten
Drittels der Steuerwirkung des Kurvenabschnittes 83 das Indexierglied 31 durch die Verriegelungs-Einrichtung 62 noch
freigegeben ist. Etwa der nächste, mittlere Drittel-Abschnitt
des Kurvenabschnittes 83 fällt zusammen mit dem zweiten Übergangsabschnitt 93 der Kurvenscheibe 63, so daß während der
entsprechenden Steuerphase die Verriegelungs-Einrichtung 62
im wesentlichen kontinuierlich ansteigend wirksam wird und
das Indexierglied 31 entsprechend in seiner Arbeitslage für
den Eingriff in die Leiste 19 des Stückgutträgers 1 formschlüssig verriegelt. Das Indexierglied 31 ist somit nun bis
zum Ende der durch den Kurvenabschnitt 80 bewirkten Vollbremsstellung quer zur Laufrichtung Pfeil 3 gegen Zurückweichen aus
seiner Arbeitslage verriegelt, da der Läufer 64 der Verriegelungs-Einrichtung 62 über den entsprechenden Bogenwinkel
kontinuierlich im Bereich des größten Umfanges der Kurvenscheibe 63 liegt. Entgegen Drehrichtung Pfeil 91 schließt sich
an den Kurvenabschnitt 83 über einen Bogenwinkel von etwa 25°
ein annähernd geradliniger Kurvenabschnitt 84 an, dessen
Abstand vom kleinsten Steuerkreis 90 allmählich und progressiv
zunimmt und der tangential in die beiden benachbarten
Kurvenabschnitte 83, 85 übergeht. Über diesen Kurvenabschnitt
84 ergibt sich wiederum eine ungebremste Leerstellung der
Bremseinrichtung 40, da einerseits das Dämpfungsglied 45
abgehoben und das Arretier-Bremsglied 44 noch nicht in
Eingriff mit der Bremsfläche 43 ist. Über den anschließenden,
sich über einen Bogenwinkel von ebenfalls etwa 25° erstreckenden
und degressiv an den mittleren Steuerkreis 89 annähernden
Kurvenabschnitt 85 wird das Arretier-Bremsglied 44 durch entsprechendes Erhöhen der Spannung der Feder 56 gegenüber der
Kraft der Feder 50 zunehmend gegen die Bremsfläche 43 gedrückt, wobei die Anpresskraft wesentlich kleiner als
während der Vollbremsstellung ist, so daß am Ende des
Kurvenabschnittes 85 eine weitere Dämpfbremsstellung
erreicht ist, die in diesem Fall über das Arretier-Bremsglied 44 eine vorbestimmte Verringerung der Leichtgängigkeit
des Stückgutträgers 1 in Laufrichtung Pfeil 3 bewirkt.
Der anschließende, sich über einen Bogenwinkel von etwa 45°
erstreckende, Kurvenabschnitt 86 liegt auf dem dieser Dämpfbremsstellung zugehörigen Steuerkreis 89, so daß also über diesen
Kurvenabschnitt 86 die Dämpfbremsstellung kontinuierlich aufrechterhalten bleibt. Entgegen Drehrichtung Pfeil 91 schließt
sich an den Kurvenabschnitt 86 ein in diesen geradlinig
und tangential übergehender sowie sich progressiv vom Steuerkreis 89 nach außen entfernender Kurvenabschnitt 87 an,
der konvex abgerundet und damit im wesentlichen kontinuierlich
degressiv in den größten Steuerkreis 88 übergeht, welchen
er am Anfang des Kurvenabschnittes 80 erreicht. Über diesen
Kurvenabschnitt 87, der einen Bogenwinkel von etwa 45°
einnimmt, wird das Arretier-Bremsglied 44 allmählich aus der
Dämpfbremsstellung in die Vollbremsstellung überführt, d.h.
zunehmend bis zur maximalen Anpresskraft gegen die Bremsfläche 43 gedrückt. Dadurch ist dann der Stückgutträger 1
auch in seiner genauen Position, bezogen auf die Laufrichtung
Pfeil 3, unbeweglich festgelegt. Der die Kurvenscheiben 53,63
steuernde Stellmotor 60 und der Stellmotor 38 für den
Antrieb des Indexiergliedes 31 werden über die Wegmeßeinrichtung 67 gesteuert.

Wie Fig. 4 ferner zeigt, ist an der von der Laufschiene 22
abgekehrten Umfangzone des Indexiergliedes 31 und des
Meßrades 68 ein verzahntes Ritzel 94 vorgesehen, das
gleichzeitig sowohl in die Verzahnung des Indexiergliedes 31
als auch in die Verzahnung des Meßrades 68 eingreift, so daß
diese hinsichtlich der Drehstellung ihrer Zähne im
wesentlichen deckungsgleich synchronisiert sind. Das Ritzel 94 ist hängend an der Deckplatte 75 des Meßträgers 69 gelagert, so daß es stets in die Umfangsverzahnung des Meßrades 68 und die Zahnung des Indexiergliedes 31 unter der Kraft der Feder 72 eingreift. Wird der Meßträger 69 entgegen Eingriffsbewegungsrichtung des Meßrades 68 zurückgeschwenkt, so löst sich das Ritzel 94 aus der Verzahnung des Indexiergliedes 31, in die es bei entgegengesetzter Bewegung wieder eintaucht. Wird dagegen das Indexierglied 31 entgegen Eingriffsbewegungsrichtung von der Laufbahn des Stückgutträgers 1 zurückbewegt, so nimmt es über das Ritzel 94 den Meßträger 69 und damit auch das an diesem gelagerte Meßrad 68 mit, so daß in diesem Fall auch das Meßrad 68 zwangsläufig aus der Laufbahn des Stückgutträgers 1 zurückgezogen wird. Beim Einlauf des Stückgutträgers 1 in die Indexier-Einrichtung 17 gelangt zunächst das in der jeweiligen Laufrichtung Pfeil 3 vordere Ende der zugehörigen, sich in Laufrichtung Pfeil 3 erstreckenden Leiste 19 in Berührung mit dem entsprechenden Abweisläufer 66 und dann gleichzeitig in Berührung mit dem Indexierglied 31 und dem Meßrad 68. Das Indexierglied 31 und damit infolge der Synchronisation das Meßrad 68 sind in dieser Phase gedämpft abgebremst, so daß ihre Verzahnung infolge der Mitnahme ausschließlich durch die Verzahnung 23 der Leiste 19 sicher in kämmenden Eingriff mit der Verzahnung 23 finden können und wegen der Verriegelung keine Gefahr besteht, daß die Verzahnungen Kopf an Kopf abrollen. Während dieser Phase ist der Kurvenabschnitt 83 der Nockenkurve 53 wirksam, über dessen zweiten Teil erst der Eingriff der Verzahnungen durch die Verriegelungseinrichtung 62 erzwungen wird, so daß dann auch eine Antriebskraft des Stellmotors 38 über das Indexierglied 31 auf den Stückgutträger 1 übertragen werden kann, ohne daß die Gefahr besteht, daß die Verzahnungen voneinander abheben. Die Steuerung ist so ausgebildet,

0203217

daß sie über den ersten Teil des Kurvenabschnittes 83
und damit über den letzten Teil der Abflachung 92 der
Kurvenscheibe 63 einen nicht korrekten Einlauf des Stückgutträgers 1, d.h. beispielsweise einen Einlauf, bei
welchem die Zahnungen Kopf an Kopf aufeinander stoßen,
erkennt und ein Wirksamwerden der Verriegelungseinrichtung 62
unterbindet. Nach erfolgtem korrektem Einlauf wird während
der Phase der Einstellung des Stückgutträgers 1 der Kurvenabschnitt 86 wirksam und nach erfolgter Einstellung über
das Indexierglied 31 erfolgt über die Kurvenabschnitte 87,
80, die Arretierung und Querausrichtung des Stückgutträgers 1 ebenfalls durch das Indexierglied 31.
Vor dem Einlauf des Stückgutträgers in die Indexier-
Einrichtung wird das Meßrad 68 und somit auch das Indexier-Glied 31 durch die Meß- und Steuereinheit 73 in seinem Drehwinkel auf eine stets gleiche Ausgangsstellung vorpositioniert, in welcher ein ganz bestimmter Zahn der zugehörigen Verzahnung so steht, daß er als
erster in Eingriff mit den ersten Zahn der Verzahnung 23
der Leiste 19 des einlaufenden Stückgutträgers 1 gelangt,
wobei die Drehwinkelstellung so gewählt wird, daß dieser
vorbestimmte Zahn sicher, d. h. formschlüssig vom ersten
Zahn des Stückgutträgers mitgenommen wird. Dadurch ergibt
sich stets wiederholbar dieselbe Meßbasis für die Wegmessung
am Stückgutträger und somit eine sehr hohe Genauigkeit bei
dessen Einstellung.

0203217

Anmelder:     Dipl-Ing.
              Hans-Ulrich Fritz
              Am Wolfsberg 10
              D-7000 Stuttgart 70


Indexier-Einrichtung für Stückgutträger
eines Fertigungs-, Montage- oder dgl.
Systems

---

P a t e n t a n s p r ü c h e

---

1.  Indexier-Einrichtung für entlang einer Förderstraße durch
Arbeitsstationen eines Fertigungs-, Montage- oder dgl. Systems laufende und in mindestens einer vorbestimmten Arbeitslage gegenüber der Förderstraße ausgerichtet festzusetzende
Stückgutträger, mit einem während des Aufenthaltes in dem
zugehörigen Streckenabschnitt in Eingriff mit einer in Laufrichtung liegenden Arretierleiste des Stückgutträgers zu bringenden und über eine Wegmeßeinrichtung gesteuert den Stückgutträger in der jeweiligen Arbeitslage festsetzenden Indexierglied, dem räumlich mindestens ein während des Aufenthaltes
in dem Streckenabschnitt in Eingriff mit einer in Laufrichtung liegenden Antriebsleiste des Stückgutträgers stehendes
Antriebsglied zugeordnet ist, dadurch gekennzeichnet, daß
das Indexierglied (31) stufenlos in Eingriff mit der Arretierleiste (19) steht.

0203217

2. Einrichtung nach Anspruch 1, dadurch gekennzeichnet, daß das Indexierglied (31) als an der Arretierleiste (19) abwälzendes Rad oder dgl. ausgebildet ist, für das eine in Steuerverbindung mit der Wegmeßeinrichtung (67) stehende Feststellbremse (41) vorgesehen und das vorzugsweise als Antriebsrad oder dgl. ausgebildet ist, dessen Antriebsmotor in Form eines Stellmotors (38) und/oder dessen in seiner Antriebsverbindung vorgesehene Schalt- bzw. Freilaufkupplung (33) in Steuerverbindung mit der Wegmeßeinrichtung (67) steht, wobei insbesondere die Feststellbremse (41), vorzugsweise in Form einer Friktionsbremse, unmittelbar benachbart zum Indexierglied (31) liegt und insbesondere die die Feststellbremse (41) aufweisende Bremseinrichtung (40) mindestens ein gegen eine achsgleich zum Indexierglied (31) liegende Umfangs-Bremsfläche (43) anlegbares Bremsglied (44,45) aufweist.

3. Einrichtung nach Anspruch 2, dadurch gekennzeichnet, daß die die Feststellbremse (41) aufweisende Bremseinrichtung (40) außer in die arretierende Vollbremsstellung (80) in mindestens eine, insbesondere zwei weitere Bremsstellungen (83,86) geringerer Bremswirkung, nämlich in mindestens eine Dämpfbremsstellung überführbar ist, wobei vorzugsweise zwischen einer Dämpfbremsstellung (86) und der Vollbremsstellung (80) stufenlose Übergänge (87) und/oder zwischen den beiden Dämpfbremsstellungen (83,86) mindestens eine ungebremste Leerstellung (84) vorgesehen ist.

4. Einrichtung nach Anspruch 2 oder 3, dadurch gekennzeichnet, daß das jeweilige Bremsglied (44,45), insbesondere unter Zwischenschaltung einer Feder (56,50), kurvengesteuert ist, wobei vorzugsweise das Bremsglied (44,45) an einem benachbart zur Bremsfläche (43) um eine zu dieser etwa parallele Lenkerachse (47) schwenkbar gelagerten Bremshebel (46) angeordnet
ist, der einen an einer Nockenkurve (53) geführten Läufer
(52) bzw. eine Läuferrolle trägt, wobei vorzugsweise der Bremshebel (46) als zweiarmige Bremsschwinge ausgebildet ist, die
an einem Arm (48) ein Dämpfbremsglied (45) und am anderen,
insbesondere mit dem Läufer (52) versehenen, Arm (49) ein
Arretier-Bremsglied (44) trägt, welche vorzugsweise beide
derselben Bremsfläche (43) des Indexiergliedes (31) zugeordnet sind und/oder vorteilhaft der Bremshebel (46) zwischen
dem Läufer (52) und dem Arretier-Bremsglied (44) in sich federnd beweglich ausgebildet ist und vorzugsweise aus zwei
schwenkbar aneinander gelagerten Hebelteilen (54) besteht,
von denen einer den Läufer (52) und der andere das Bremsglied
(44) trägt und die über eine vorgespannte Feder (56) in Eingriff miteinander stehen.

5. Einrichtung nach einem der Ansprüche 1 bis 4, dadurch gekennzeichnet, daß das Indexierglied (31), der Stellmotor (38)
und/oder die Kupplung (33) an einem quer zur Laufebene (27)
der Arretierleiste (19) an einer Konsole (24) bewegbar, insbesondere schwenkbar, gelagerten Träger (29) angeordnet sind,
der vorzugsweise zur Eingriffsstellung des Indexiergliedes
(31) federbelastet und/oder mit einer Andrückeinrichtung über
das Indexierglied (31) gegen den an einem Widerlager der Förderstraße (2) abstützbaren Stückgutträger (1) preßbar ist,
wobei insbesondere das Druckglied der Andrückeinrichtung durch
das Arretier-Bremsglied (44) der Bremseinrichtung (40) gebildet ist, welches an einem der Eingriffszone des Indexiergliedes (31) etwa diametral gegenüberliegenden Umfangsabschnitt
der Bremsfläche (43) liegt.

6. Einrichtung nach einem der Ansprüche 1 bis 5, dadurch gekennzeichnet, daß eine das Indexierglied (31) in einer Einlaufstellung für die Arretierleiste (19) gegen Abhebbewegungen
von deren Laufebene (27) sichernde Verriegelungs-Einrichtung
(62) vorgesehen ist, die insbesondere eine Kurvenscheibe (63)
und einen an dieser geführten Läufer (64) beispielsweise eine
Läuferrolle aufweist und vorzugsweise derart synchron mit
der Bremseinrichtung (40) gesteuert ist, daß sie am Ende der
Leerstellung (82) der Bremseinrichtung (40) etwa in maximaler
Freigabestellung (92) steht und über die anschließende Dämpfbremsstellung (83) stetig zur maximalen Verriegelungsstellung
ansteigt, die vorzugsweise bis zum Ende der Arretierbremsstellung (80) reicht, wobei vorteilhaft die Kurvenscheibe (63)
der Verriegelungseinrichtung (62) auf derselben Welle (58)
wie die Nockenkurve (53) der Bremseinrichtung (40), beispielsweise an der gegenüberliegenden Seite eines Getriebes (59),
angeordnet ist und daß von den beiden aneinander laufenden,
durch die Kurvenscheibe (63) und den Läufer (64) gebildeten
Teilen der Verriegelungseinrichtung (62) einer an der Konsole
(24) und einer an dem Träger (29) gelagert ist.

7. Einrichtung nach Anspruch 5 oder 6, dadurch gekennzeichnet,
daß wenigstens in Einlaufrichtung (Pfeil 3) des Stückgutträgers (1) vor dem Indexierglied (31) ein annähernd so weit
wie, insbesondere geringfügig weniger weit als, das Indexierglied (31) in die Laufbahn des Stückgutträgers (1) ragender
Abweisläufer (66) an dem Träger (29) vorgesehen ist, und daß
vorzugsweise in Laufrichtung (Pfeil 3) beiderseits des Indexiergliedes (31) Abweisläufer (66) angeordnet sind, wobei insbesondere der Abweisläufer (66) im Bewegungsbereich der Arretierleiste (19) des Stückgutträgers (1) liegt und vorzugsweise
durch eine Rolle gebildet ist, die um eine zum Indexierglied
(31) parallele Achse drehbar gelagert ist.

8. Einrichtung nach einem der Ansprüche 1 bis 7, dadurch gekennzeichnet, daß die Wegmeßeinrichtung (67) als Tastglied ein an einer Meßleiste (19) des Stückgutträgers (1), insbesondere an der Arretierleiste (19), abwälzendes Meßrad (68) aufweist, das vorzugsweise etwa achsgleich zum Indexierglied (31) und/ oder quer zur Laufrichtung (Pfeil 3) des Stückgutträgers (1) unmittelbar benachbart zum Indexierglied (31) liegt, wobei insbesondere das Meßrad (68) an einem gesonderten, quer zur Laufebene (27) der Meßleiste an der Konsole (24) bewegbar, insbesondere um dieselbe Achse (26) wie der Träger (29) des Indexiergliedes (31) schwenkbar gelagerten Meßträger (69) angeordnet und vorzugsweise zur Eingriffsstellung federbelastet ist und/oder das Meßrad (68) gegen Eingriffsbewegungsrichtung gegenüber dem Indexierglied (31) bewegbar und in dieser Bewegungsrichtung an das Indexierglied (31) über einen Schlepp-Mitnehmer, insbesondere ein Ritzel (94) gekoppelt ist, das an der von der Eingriffszone abgekehrten Seite des Indexiergliedes (31) anliegt und am Meßträger (69) gelagert ist.

9. Einrichtung nach einem der Ansprüche 1 bis 8, dadurch gekennzeichnet, daß das Indexierglied (31) und/oder das Meßrad (68) als Zahnräder ausgebildet und vorzugsweise über ein in deren Zahnungen eingreifendes Zahn-Ritzel (94) synchronisiert sind, das insbesondere den Mitnehmer bildet und/oder das Meßrad (68), vorzugsweise über einen Zahnriemen-Trieb (74), mit der zugehörigen Meß- und Steuereinheit (73), insbesondere einem Inkrementalgeber, antriebsverbunden ist, wobei vorzugsweise die Meß- und Steuereinheit (73) an dem Meßträger (69) zwischen dessen Schwenkachse (26) und dem Meßrad (68) angeordnet und letzteres in Einlaufstellung für den Stückgutträger (1) auf eine vorbestimmte Drehwinkelstellung vorpositioniert ist.

10. Einrichtung, insbesondere nach einem der Ansprüche 1 bis 9, dadurch gekennzeichnet, daß das Indexierglied (31) und/oder das Meßrad (68) für den seitlichen Eingriff in einen Schienenabschnitt (22) der Förderstraße (2) ausgebildet sind und daß vorzugsweise das Meßrad (68) oberhalb des Indexiergliedes (31) liegt und beide einschließlich des Meßträgers (69), des bzw. der Abweisläufer (66), der Bremseinrichtung (40) und/oder der Meß- und Steuereinheit (73), im wesentlichen oberhalb der beispielsweise plattenförmigen Konsole (24) liegen, während der Träger (29) für das Indexierglied (31), die Stellmotoren (38,60) für das Indexierglied (31) und die Kurvenscheiben (53,63) ggf. einschließlich zugehöriger Getriebe (39,59) und/oder die Verriegelungseinrichtung (62) im wesentlichen unterhalb der Konsole (24) angeordnet sind.

Fig.1

Fig.2

Fig.7

Fig.3

Fig.4

Fig.5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 062 267 (PRODUTEC ENTWICKLUNGS- UND PLANUNGSGESELLSCHAFT FÜR PRODUKTIONSSYSTEME UND AUTOMATISIERUNGSTECHNIK GMBH) * Seite 2, Zeile 16 - Seite 5, Zeile 31 * | 1 | B 23 Q 7/14 B 65 G 37/02 |
| D,A | DE-A-3 112 911 (PRODUTEC ENTWICKLUNGS- UND PLANUNGSGESELLSCHAFT FÜR PRODUKTIONSSYSTEME UND AUTOMATISIERUNGSTECHNIK GMBH) * Ansprüche 1-10 * | 1 | |
| A | DE-A-2 851 699 (FRIEDRICH KESSLER, WERKZEUG- UND MASCHINENBAU) * Seite 6, Zeile 12 - Seite 9, Zeile 10 * | 1-3 | **RECHERCHIERTE SACHGEBIETE (Int. Cl.4)** |
| A | DE-B-1 289 781 (CARGILL et al.) | | B 23 Q 7/00 B 23 Q 41/00 B 65 G 35/00 B 65 G 37/00 |

Der vorliegende Recherchenbericht wurde für alle Patentansprüche erstellt.

| Recherchenort | Abschlußdatum der Recherche | Prüfer |
|---|---|---|
| BERLIN | 07-01-1986 | SIMON J J P |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82